Europäisches Patentamt

European Patent Office

Office européen des brevets

(19)

(11) Veröffentlichungsnummer: **0 261 472 B1**

(12) # EUROPÄISCHE PATENTSCHRIFT

(45) Veröffentlichungstag der Patentschrift: **06.11.91**

(51) Int. Cl.5: **B29C 45/16**, F16K 31/60

(21) Anmeldenummer: 87112873.2

(22) Anmeldetag: 03.09.87

(54) **Kunststoffteil.**

(30) Priorität: **20.09.86 DE 3632095**

(43) Veröffentlichungstag der Anmeldung:
**30.03.88 Patentblatt 88/13**

(45) Bekanntmachung des Hinweises auf die
Patenterteilung:
**06.11.91 Patentblatt 91/45**

(84) Benannte Vertragsstaaten:
**AT DE ES FR IT**

(56) Entgegenhaltungen:
**EP-A- 0 180 383**
**DE-A- 2 447 664**

**PATENT ABSTRACTS OF JAPAN, Band 9, Nr.
132 (M-385)[1855], 7. Juni 1985; & JP-A-60 13
516 (DENKI KAGAKU KOGYO K.K.) 24-01-1985**

**PATENT ABSTRACTS OF JAPAN, Band 7, Nr.
223 (M-247)[1368], 4. Oktober 1983; & JP-A-58
118 387 (TOUTOU KIKI K.K.) 14-07-1983**

**PATENT ABSTRACTS OF JAPAN, Band 6, Nr.
232 (M-172)[1110], 18. November 1982; & JP-
A-57 134 090 (TOUTOU KIKI K.K.) 19-08-1982**

(73) Patentinhaber: **FRIEDRICH GROHE ARMATU-
RENFABRIK GmbH & CO
Hauptstrasse 137
W-5870 Hemer 1(DE)**

(72) Erfinder: **Haufe, Rudolf
Breiter Weg 14
W-5750 Menden(DE)**
Erfinder: **Lipowski, Kurt
Adolf-Sauer-Weg 6
W-5750 Menden(DE)**
Erfinder: **Kleinhans, Werner
Dreishofstrasse 64
W-4750 Unna-Uelzen(DE)**

## Beschreibung

Die Erfindung betrifft einen Kunststoffkörper als Wasserleitungsarmatur, wobei der Kunststoffkörper aus einem Kernkörper und einer Oberflächenschicht gebildet ist.

Aus der DE-A-24 47 664 war ein derartiger Kunststoffkörper als Griffstück bekannt. Hierbei sind im Kernkörper Armierungsfüllstoffe aus Glas- oder Asbestfasern vorgeschlagen. Vom Gewicht her entspricht somit dieses Griffstück den allgemein vorbekannten Kunststoffgriffen.

Diese, im Verhältnis zu den bekannten Metallgriffen, insbesondere Messinggriffen, als sehr leicht einzustufenden Kunststoffgriffe werden vielfach als weniger geeignet zur Handhabung von Sanitärarmaturen angesehen. Es wird deshalb nicht selten eine schwere Ausführung der Griffstücke gefordert, so daß diese dann relativ aufwendig aus Metall erstellt werden müssen.

Der Erfindung liegt daher die Aufgabe zugrunde, den Kunststoffkörper zu verbessern und so zu gestalten, daß das Gewicht des Kunststoffkörpers, insbesondere ein Kunststoffgriffstück, einen entsprechenden Metallkörper, insbesondere Metallgriffstück, angenähert ist.

Diese Aufgabe wird erfindungsgemäß mit den kennzeichnenden Merkmalen des Anspruchs 1 gelöst.

Weitere Ausgestaltungen der Erfindung sind in den Ansprüchen 2 und 3 angegeben.

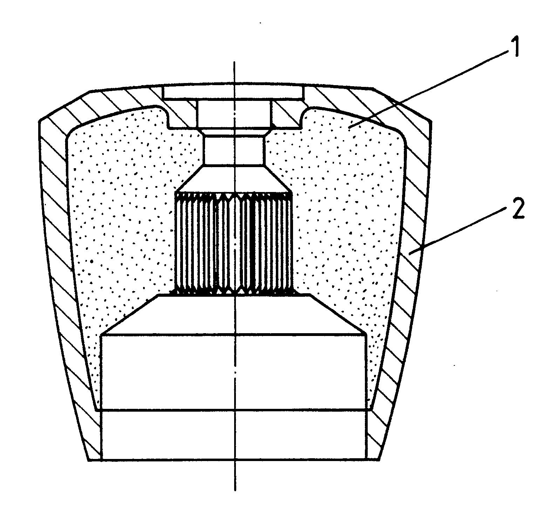

In der Zeichnung ist ein Ausführungsbeispiel des Kunststoffkörpers in Form eines Knaufgriffstücks für Sanitärarmaturen im Schnitt gezeigt.

Das glockenförmig gestaltete Griffstück ist von einem Kernkörper 1 aus Kunststoff mit Metallspänen, beispielsweise aus Messing, als Füllstoff gebildet. Auf der sichtbaren Oberfläche des Kernkörpers 1 ist eine Oberflächenschicht 2 angeordnet. Bei dem Ausführungsbeispiel ist für den Kernkörper 1 als Kunststoff Polycarbonat (PC) eingesetzt. Für die Oberflächenschicht 2 ist als Kunststoff Poly-Acrylnitril-Butadien-Styrol (ABS) eingesetzt.

Der Kernkörper 1 kann in konventioneller Weise in einer Gießform im Spritzgießverfahren hergestellt werden. Der Kernkörper 1 wird danach in einer zweiten Gießform mit der Oberflächenschicht 2 umspritzt. Die etwa 2mm dicke Oberflächenschicht 2 haftet an und/oder verschweißt hierbei mit dem Kernkörper 1, wobei eine hochwertige Oberfläche erzeugt werden kann, da keine Metallpartikeln in diesem Bereich vorhanden sind. Die Oberflächenschicht 2 kann dabei gefärbt oder durchsichtig ausgebildet sein. Auch kann abschließend auf die Oberflächenschicht 2 noch eine Verchromung aufgebracht werden.

Neben den im Ausführungsbeispiel verwendeten Kunststoffen PC/ABS, können selbstverständlich auch andere geeignete Kunststoffe eingesetzt werden. Auch dürfte es möglich sein, für den Kernkörper und für die Oberflächenschicht den gleichen Kunststoff zu verwenden, wobei an der rauhen Oberfläche des mit schweren Partikeln gefüllten Kernkörpers eine besonders gute Haftung der Oberflächenschicht erzielbar sein dürfte. Außerdem können als Füllstoff für den Kernkörper auch Partikeln von Bariumsulfat (Schwerspat) oder ähnliche, ein hohes spezifisches Gewicht aufweisende Materialien eingesetzt werden.

## Patentansprüche

1. Kunststoffkörper als Wasserleitungsarmatur oder Teil einer Wasserleitungsarmatur, wobei der Kunststoffkörper aus einem Kernkörper (1) und einer Oberflächenschicht (2) gebildet ist, dadurch gekennzeichnet, daß der Kernkörper (1) mit schweren Partikeln, insbesondere mit Metallspänen ·oder Metallpulver, als Füllstoff versehen ist.

2. Kunststoffkörper nach Anspruch 1, dadurch gekennzeichnet, daß die Oberflächenschicht (2) etwa 2 mm dick ist.

3. Kunststoffkörper nach einem der Ansprüche 1 oder 2, dadurch gekennzeichnet, daß für den Kernkörper (1) und der Oberflächenschicht (2) der gleiche Kunststoff eingesetzt ist.

## Claims

1. Plastics body as a plumbing fitting or part of a plumbing fitting, in which the plastics body is formed from a core body (1) and a surface layer (2), characterized in that the core body (1) is provided with heavy particles as filler, especially with metal shavings or metal powder.

2. Plastics body according to claim 1, characterized in that the surface layer (2) is about 2 mm thick.

3. Plastics body according to one of claims 1 or 2, characterized in that the same plastics is used for the core body (1) and for the surface layer (2)

## Revendications

1. Pièce en matière synthétique constituant un robinet sanitaire ou une pièce de robinet sanitaire, la pièce en matière synthétique se composant d'un corps de base (1) et d'une couche de surface (2), pièce caractérisée en ce que le corps de base (1) comporte comme charge des particules lourdes notamment des copeaux métalliques ou de la poudre métallique.

2. Pièce en matière synthétique selon la revendication 1, caractérisée en ce que la couche en surface (2) a une épaisseur de l'ordre de 2 mm.

3. Pièce en matière synthétique selon l'une des revendications 1 ou 2, caractérisée en ce qu'on utilise la même matière synthétique pour le corps de base (1) et pour la couche en surface (2).